# EUROPEAN PATENT SPECIFICATION

(11) **EP 3 021 668 B1**
(45) Date of publication and mention of the grant of the patent: **12.09.2018**
(21) Application number: 14736816.1
(22) Date of filing: 08.07.2014
(51) Int. Cl.: A01N 25/02, A01N 43/56, A01N 47/24

(54) **EMULSIFIABLE CONCENTRATE COMPRISING PESTICIDE, ALKYL LACTATE, FATTY AMIDE AND ACETOPHENONE**
EMULGIERBARES KONZENTRAT ENTHALTEND PESTIZID, ALKYLLAKTAT, FETTAMID UND ACETOPHENON
CONCENTRÉ ÉMULSIFIABLE COMPRENANT UN PESTICIDE, UN LACTATE D'ALKYLE, UN AMIDE GRAS ET UN ACÉTOPHÉNONE

(30) Priority: 18.07.2013 EP 13177096; 04.11.2013 EP 13191400
(43) Date of publication of application: 25.05.2016
(73) Proprietor: BASF SE, 67056 Ludwigshafen am Rhein (DE)
(72) Inventor: MAYER, Winfried, 55270 Bubenheim (DE); STEINBACHER, Ralph, 67459 Böhl-Iggelheim (DE)
(74) Representative: BASF IP Association
(86) International application number: PCT/EP2014/064601
(87) International publication number: WO 2015/007573

(56) References cited:
- EP-B1- 2 076 119
- WO-A1-2005/074685
- WO-A1-2011/037968
- WO-A1-2011/085310
- WO-A1-2012/069514
- DE-A1-102010 046 679
- "Purasolv Lactate esters in agrochemical formulations", , 1 March 2011 (2011-03-01), pages 1-2, XP055070539, Retrieved from the Internet: URL:www.purac.com/_sana_/handlers/getfile. ashx/39aa4048-724a-4885-ab77-c3904077f80c/ PURASOLV+in+agrochemical+formulations.pdf [retrieved on 2013-07-10]
- V Bramati ET AL: "Geronols for sugar beet", , 15 April 2010 (2010-04-15), pages 1-11, XP055084218, Italy Retrieved from the Internet: URL:http://www.ametech.it/docs/PMP_DMP_ETH OFUMESATE_formulations.pdf [retrieved on 2013-10-16]

## Description

Subject matter of the present invention is an emulsifiable concentrate comprising a water-insoluble pesticide, a) 2-ethylhexyl lactate, b) 3% to 25% by weight of an amide of the formula (I) as defined herein, and c) at least 5% by weight acetophenone. The invention further relates to a process for the preparation of said concentrate; an emulsion comprising water and the concentrate as defined herein; and to a method for controlling phytopathogenic fungi and/or undesired vegetation and/or undesired attack by insects or mites and/or for regulating the growth of plants, where the concentrate or the emulsion is allowed to act on the respective pests, their environment or on the crop plants to be protected from the respective pests, on the soil and/or on undesired plants and/or on the crop plants and/or their environment. The present invention comprises combinations of preferred features with other preferred features.

Emulsifiable concentrates (also referred to as EC) are widely used formulations in crop protection. The disadvantage of the known emulsifiable concentrates is the poor cold stability, the pronounced tendency to crystallize, the low pesticide concentration, and high eye toxicity.

WO 2014/154447 discloses emulsifiable concentrates comprising a water-insoluble pesticide, an alkyl lactate and a N,N-dialkyl alkylamide.

WO 2012/069514 A1 discloses emulsifiable concentrate formulations comprising (S)-2-ethylhexyl lactate, *N*,*N*-dimethyl dodecanoic acid amide and an active ingredient mixture.

EP 2076119 B1 discloses emulsifiable concentrate formulations comprising a water-insoluble pesticide and acetophenone, cyclohexyl acetate and DMSO.

It was an object of the present invention to provide an emulsion concentrate which overcomes these disadvantages.

The object was achieved by an an emulsifiable concentrate comprising a water-insoluble pesticide,
a) 2-ethylhexyl lactate,
b) 3% to 25% by weight of an amide of the formula (I)

   R¹-C(O)N(R²)₂ (I)

   where R¹ is C₇-C₁₁-alkyl and R² is methyl, and
c) at least 5% by weight acetophenone.

Usually, an **emulsifiable concentrate** is taken to mean compositions which form an oil-in-water emulsion upon mixing with water (e.g. in a weight ratio of 1 part concentrate to 99 parts water). The emulsion usually arises spontaneously. The resulting emulsion may have an average droplet size of more than 0.1 µm, preferably more than 0.5 µm, in particular more than 0.8 µm, and most preferred more than 1.1 µm. The average droplet size may be determined by laser diffraction, e.g. with a Malvern Mastersizer 2000.

The concentrate is preferably present as a **homogeneous solution.** It is usually virtually free from dispersed particles.

Suitable **alkyl** lactate is 2-ethylhexyl lactate. The 2-ethylhexyl lactate can be present in the form of D- and/or L-lactates, with the L-lactates being preferred.

The concentrate can comprise at least 5% by weight, preferably at least 10% by weight, more preferably at least 15% by weight of 2-ethylhexyl lactate . The concentrate can comprise not more than 80% by weight, preferably not more than 70% by weight and in particular not more than 60% by weight of the 2-ethylhexyl lactate .

**Amides** of the formula (I) are those in which R¹ is C₇-C₁₁-alkyl (preferably linear) and R² is methyl. Especially preferred amides of the formula (I) are those in which R¹ is C₉-C₁₁-alkyl and R² is methyl. In particular, R¹ is n-undecyl and R² is methyl.

Mixtures of amides of the formula (I) are also possible, for example mixtures where R¹ is C₇-C₁₁-alkyl and R² is methyl. Mixtures of amides of the formula (I) comprise in most cases two amides of the formula (I) in an amount of in each case at least 30% by weight (preferably at least 40% by weight) based on the total amount of amides of the formula (I).

The concentrate can comprise not more than 25% by weight, more preferably not more than 20% by weight, and in particular not more than 17% by weight of amide of the formula (I). The concentrate can comprise at least 3% by weight, preferably at least 6% by weight and in particular at least 10% by weight of amide of the formula (I).

The concentrate comprises **acetophenone,** which may be also known under CAS Registry Number 98-86-2. The concentrate comprises at least 5%, preferably at least 8%, more preferably at least 11%, and in particular at least 13 % by weight of the acetophenone. The concentrate can comprise not more than 60% by weight, preferably not more than 35% by weight, and in particular not more than 20% by weight of acetophenone.

The concentrate may comprise a **further solvent** in addition to the aforementioned solvents a), b), and c). Suitable further solvents and liquid carriers are organic solvents such as mineral oil fractions with medium to high boiling point, for example kerosene, diesel oil; oils of vegetable or animal origin; aliphatic, cyclic and aromatic hydrocarbons, for example toluene, paraffin, tetrahydronaphthalene, alkylated naphthalenes; alcohols, for example ethanol, propanol, butanol, cyclohexanol; glycols; cyclohexanone; carbonates; fatty acid esters; gamma-butyrolactone; fatty acids; phosphonates; amines; N-methylpyrrolidone; and their mixtures.

The further solvent may be dissolved in the concentrate and may optionally form a homogeneous solution. The concentrate can comprise at least 1% by weight of the further solvent. The concentrate can comprise not more than 40% by weight, preferably not more than 10% by weight, more preferably not more than 5% by weight, and in particular not more than 2% by weight of the further solvent.

The amounts of these components a), b) and c), and optionally further solvents add up to a sum of 30 to 95% by weight, preferably 40 to 80% by weight, and in particular 45 to 65% by weight.

The concentrate can comprise from 5 to 60% by weight of the 2-ethylhexyl lactate, 2 to 35% by weight of the amide of the formula (I), and 7 to 55% by weight of the acetophenone, wherein the amounts of these components a), b) and c) add up to a sum of 30 to 95% by weight.

Preferably, the concentrate can comprise from 10 to 45% by weight of the 2-ethylhexyl lactate, 5 to 25% by weight of the amide of the formula (I), and 10 to 35% by weight of the acetophenone, wherein the amounts of these components a), b) and c) add up to a sum of 30 to 95% by weight.

In particular, the concentrate can comprise from 15 to 30% by weight of the 2-ethylhexyl lactate, 10 to 20% by weight of the amide of the formula (I), and 12 to 20% by weight of the acetophenone, wherein the amounts of these components a), b) and c) add up to a sum of 40 to 80% by weight.

Usually, the concentrate is substantially **free from water.** It can comprise not more than 3% by weight, preferably not more than 1% by weight and in particular not more than 0.5% by weight of water. In special form, the concentrate may comprise not more than 0.3% by weight and in particular not more than 0.1% by weight of water.

The term **pesticides** refers to at least one active substance selected from the group of the fungicides, insecticides, nematicides, herbicides, safeners and/or growth regulators. Preferred pesticides are fungicides, insecticides, herbicides and growth regulators. Especially preferred pesticides are fungicides. Mixtures of pesticides from two or more of the abovementioned classes may also be used. The skilled worker is familiar with such pesticides, which can be found, for example, in Pesticide Manual, 16th Ed. (2012), The British Crop Protection Council, London. The following pesticides are suitable, by way of example (pesticides A) to K) are fungicides):
A) Respiration inhibitors
   - Inhibitors of complex III at Qₒ site (e.g. strobilurins): azoxystrobin, coumethoxystrobin, coumoxystrobin, dimoxystrobin, enestroburin, fenaminstrobin, fenoxy-strobin/flufenoxystrobin, fluoxastrobin, kresoxim-methyl, metominostrobin, orysastrobin, picoxystrobin, pyraclostrobin, pyrametostrobin, pyraoxystrobin, trifloxystrobin, 2-[2-(2,5-dimethyl-phenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methylacetamide, pyribencarb, triclopyricarb/chlorodincarb, famoxadone, fenamidone;
   - inhibitors of complex III at Qᵢ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl]2-methylpropanoate, [(3S,6S,7R,8R)-8-benzyl-3-[(3-isobutoxycarbonyloxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl] 2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate
   - inhibitors of complex II (e. g. carboxamides): benodanil, benzovindiflupyr, bixafen, boscalid, carboxin, fenfuram, fluopyram, flutolanil, fluxapyroxad, furametpyr, isofetamid, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 1,3,5-trimethyl-N-(1,1,3-trimethylindan-4-yl)pyrazole-4-carboxamide, N-(7-fluoro-1,1,3-trimethyl-indan-4-yl)-1,3-dimethyl-pyrazole-4-carboxamide, N-[2-(2,4-dichlorophenyl)-2-methoxy-1-methyl-ethyl]-3-(difluoromethyl)-1-methyl-pyrazole-4-carboxamide;
   - other respiration inhibitors (e.g. complex I, uncouplers): diflumetorim, (5,8-difluoroquinazolin-4-yl)-{2-[2-fluoro-4-(4-trifluoromethylpyridin-2-yloxy)-phenyl]-ethyl}-amine; nitrophenyl derivates: binapacryl, dinobuton, dinocap, fluazinam; ferimzone; organometal compounds: fentin salts, such as fentin-acetate, fentin chloride or fentin hydroxide; ametoctradin; and silthiofam;
B) Sterol biosynthesis inhibitors (SBI fungicides)
   - C14 demethylase inhibitors (DMI fungicides): triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 1-[*rel*-(2*S*;3*R*)-3-(2-chlorophenyl)-2-(2,4-difluorophenyl)-oxiranylmethyl]-5-thiocyanato-1H-[1,2,4]triazole, 2-[*rel*-(2*S*;3*R*)-3-(2-chlorophenyl)-2-(2,4-difluorophenyl)-oxiranylmethyl]-2H-[1,2,4]triazole-3-thiol, 2-[2-chloro-4-(4-chlorophenoxy)phenyl]-1-(1,2,4-triazol-1-yl)pentan-2-ol, 1-[4-(4-chlorophenoxy)-2-(trifluoromethyl)phenyl]-1-cyclopropyl-2-(1,2,4-triazol-1-yl)ethanol, 2-[4-(4-chlorophenoxy)-2-(trifluoromethyl)phenyl]-1-(1,2,4-triazol-1-yl)butan-2-ol, 2-[2-chloro-4-(4-chlorophenoxy)phenyl]-1-(1,2,4-triazol-1-yl)butan-2-ol, 2-[4-(4-chlorophenoxy)-2-(trifluoromethyl)phenyl]-3-methyl-1-(1,2,4-triazol-1-yl)butan-2-ol, 2-[4-(4-chlorophenoxy)-2-(trifluoromethyl)phenyl]-1-(1,2,4-triazol-1-yl)propan-2-ol, 2-[2-chloro-4-(4-chlorophenoxy)phenyl]-3-methyl-1-(1,2,4-triazol-1-yl)butan-2-ol, 2-[4-(4-chlorophenoxy)-2-(trifluoromethyl)phenyl]-1-(1,2,4-triazol-1-yl)pentan-2-ol, 2-[4-(4-fluorophenoxy)-2-(trifluoromethyl)phenyl]-1-(1,2,4-triazol-1-yl)propan-2-ol; imidazoles: imazalil, pefurazoate, prochloraz, triflumizol; pyrimidines, pyridines and piperazines: fenarimol, nuarimol, pyrifenox, triforine, [3-(4-chloro-2-fluoro-phenyl)-5-(2,4-difluorophenyl)isoxazol-4-yl]-(3-pyridyl)methanol;
   - Delta14-reductase inhibitors: aldimorph, dodemorph, dodemorph-acetate, fenpropimorph, tridemorph, fenpropidin, piperalin, spiroxamine;
   - Inhibitors of 3-keto reductase: fenhexamid;
C) Nucleic acid synthesis inhibitors
   - phenylamides or acyl amino acid fungicides: benalaxyl, benalaxyl-M, kiralaxyl, metalaxyl, metalaxyl-M (mefenoxam), ofurace, oxadixyl;
   - others: hymexazole, octhilinone, oxolinic acid, bupirimate, 5-fluorocytosine, 5-fluoro-2-(p-tolylmethoxy)pyrimidin-4-amine, 5-fluoro-2-(4-fluorophenylmethoxy)pyrimidin-4-amine;
D) Inhibitors of cell division and cytoskeleton
   - tubulin inhibitors, such as benzimidazoles, thiophanates: benomyl, carbendazim, fuberidazole, thiabendazole, thiophanate-methyl; triazolopyrimidines: 5-chloro-7-(4-methyl-piperidin-1-yl)-6-(2,4,6-trifluorophenyl)-[1,2,4]triazolo[1,5-a]pyrimidine
   - other cell division inhibitors: diethofencarb, ethaboxam, pencycuron, fluopicolide, zoxamide, metrafenone, pyriofenone;
E) Inhibitors of amino acid and protein synthesis
   - methionine synthesis inhibitors (anilino-pyrimidines): cyprodinil, mepanipyrim, pyrimethanil;
   - protein synthesis inhibitors: blasticidin-S, kasugamycin, kasugamycin hydrochloride-hydrate, mildiomycin, streptomycin, oxytetracyclin, polyoxine, validamycin A;
F) Signal transduction inhibitors
   - MAP / histidine kinase inhibitors: fluoroimid, iprodione, procymidone, vinclozolin, fenpiclonil, fludioxonil;
   - G protein inhibitors: quinoxyfen;
G) Lipid and membrane synthesis inhibitors
   - Phospholipid biosynthesis inhibitors: edifenphos, iprobenfos, pyrazophos, isoprothiolane;
   - lipid peroxidation: dicloran, quintozene, tecnazene, tolclofos-methyl, biphenyl, chloroneb, etridiazole;
   - phospholipid biosynthesis and cell wall deposition: dimethomorph, flumorph, mandipropamid, pyrimorph, benthiavalicarb, iprovalicarb, valifenalate and N-(1-(1-(4-cyanophenyl)ethanesulfonyl)-but-2-yl) carbamic acid-(4-fluorophenyl) ester;
   - compounds affecting cell membrane permeability and fatty acides: propamocarb, propamocarb-hydrochlorid
   - fatty acid amide hydrolase inhibitors: oxathiapiprolin;
H) Inhibitors with Multi Site Action
   - inorganic active substances: Bordeaux mixture, copper acetate, copper hydroxide, copper oxychloride, basic copper sulfate, sulfur;
   - thio- and dithiocarbamates: ferbam, mancozeb, maneb, metam, metiram, propineb, thiram, zineb, ziram;
   - organochlorine compounds (e.g. phthalimides, sulfamides, chloronitriles): anilazine, chlorothalonil, captafol, captan, folpet, dichlofluanid, dichlorophen, hexachlorobenzene, pentachlorphenole and its salts, phthalide, tolylfluanid, N-(4-chloro-2-nitro-phenyl)-N-ethyl-4-methyl-benzenesulfonamide;
   - guanidines and others: guanidine, dodine, dodine free base, guazatine, guazatine-acetate, iminoctadine, iminoctadine-triacetate, iminoctadine-tris(albesilate), dithianon, 2,6-dimethyl-1H,5H-[1,4]dithiino[2,3-c:5,6-c']dipyrrole-1,3,5,7(2H,6H)-tetraone;
I) Cell wall synthesis inhibitors
   - inhibitors of glucan synthesis: validamycin, polyoxin B; melanin synthesis inhibitors: pyroquilon, tricyclazole, carpropamid, dicyclomet, fenoxanil;
J) Plant defence inducers
   - acibenzolar-S-methyl, probenazole, isotianil, tiadinil, prohexadione-calcium; phosphonates: fosetyl, fosetyl-aluminum, phosphorous acid and its salts;
K) Unknown mode of action
   - bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxathiapiprolin, tolprocarb, 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, oxin-copper, proquinazid, tebufloquin, tecloftalam, triazoxide, 2-butoxy-6-iodo-3-propylchromen-4-one, N-(cyclo-propylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, methoxy-acetic acid 6-tert-butyl-8-fluoro-2,3-dimethyl-quinolin-4-yl ester, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-dimethoxy-pyrimidin-2-yl)-2-methyl-1H-benzoimidazole, 2-(4-chloro-phenyl)-N-[4-(3,4-dimethoxy-phenyl)-isoxazol-5-yl]-2-prop-2-ynyloxy-acetamide, ethyl (Z)-3-amino-2-cyano-3-phenyl-prop-2-enoate, tert-butyl N-[6-[[(Z)-[(1-methyltetrazol-5-yl)-phenyl-methylene]amino]oxymethyl]-2-pyridyl]carbamate, pentyl N-[6-[[(Z)-[(1-methyltetrazol-5-yl)-phenyl-methylene]amino]oxymethyl]-2-pyridyl]carbamate, 2-[2-[(7,8-difluoro-2-methyl-3-quinolyl)oxy]-6-fluoro-phenyl]propan-2-ol, 2-[2-fluoro-6-[(8-fluoro-2-methyl-3-quinolyl)oxy]phenyl]propan-2-ol, 3-(5-fluoro-3,3,4,4-tetramethyl-3,4-dihydroisoquinolin-1-yl)quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinoline;
**M) Growth regulators**
   abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid, maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid, trinexapac-ethyl and uniconazole;
**N) Herbicides**
   - acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
   - amino acid derivatives: bilanafos, glyphosate, glufosinate, sulfosate;
   - aryloxyphenoxypropionates: clodinafop, cyhalofop-butyl, fenoxaprop, fluazifop, haloxyfop, metamifop, propaquizafop, quizalofop, quizalofop-P-tefuryl;
   - Bipyridyls: diquat, paraquat;
   - (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
   - cyclohexanediones: butroxydim, clethodim, cycloxydim, profoxydim, sethoxydim, tepraloxydim, tralkoxydim;
   - dinitroanilines: benfluralin, ethalfluralin, oryzalin, pendimethalin, prodiamine, trifluralin;
   - diphenyl ethers: acifluorfen, aclonifen, bifenox, diclofop, ethoxyfen, fomesafen, lactofen, oxyfluorfen;
   - hydroxybenzonitriles: bomoxynil, dichlobenil, ioxynil;
   - imidazolinones: imazamethabenz, imazamox, imazapic, imazapyr, imazaquin, imazethapyr;
   - phenoxy acetic acids: clomeprop, 2,4-dichlorophenoxyacetic acid (2,4-D), 2,4-DB, dichlorprop, MCPA, MCPA-thioethyl, MCPB, Mecoprop;
   - pyrazines: chloridazon, flufenpyr-ethyl, fluthiacet, norflurazon, pyridate;
   - pyridines: aminopyralid, clopyralid, diflufenican, dithiopyr, fluridone, fluroxypyr, picloram, picolinafen, thiazopyr;
   - sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
   - triazines: ametryn, atrazine, cyanazine, dimethametryn, ethiozin, hexazinone, metamitron, metribuzin, prometryn, simazine, terbuthylazine, terbutryn, triaziflam;
   - ureas: chlorotoluron, daimuron, diuron, fluometuron, isoproturon, linuron, metha-benzthiazuron, tebuthiuron;
   - other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
   - others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester.
**O) Insecticides**
   - organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
   - carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
   - pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
   - insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
   - nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;
   - GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide;
   - macrocyclic lactone insecticides: abamectin, emamectin, milbemectin, lepimectin, spinosad, spinetoram;
   - mitochondrial electron transport inhibitor (METI) I acaricides: fenazaquin, pyridaben, tebufenpyrad, tolfenpyrad, flufenerim;
   - METI II and III compounds: acequinocyl, fluacyprim, hydramethylnon;
   - Uncouplers: chlorfenapyr;
   - oxidative phosphorylation inhibitors: cyhexatin, diafenthiuron, fenbutatin oxide, propargite;
   - moulting disruptor compounds: cryomazine;
   - mixed function oxidase inhibitors: piperonyl butoxide;
   - sodium channel blockers: indoxacarb, metaflumizone;
   - ryanodine receptor inhibitors: chlorantraniliprole, cyantraniliprole, flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyano-phenyl]-2-(3-chloro-2-pyridyl)-5-(trifluoromethyl)pyrazole-3-carboxamide; N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide;
   - others: benclothiaz, bifenazate, cartap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl] cyclopropaneacetic acid ester.

The pesticide is **water-insoluble.** It is soluble in water not more than 5 g/l, preferably not more than 1 g/l and in particular to not more than 200 mg/l at 20°C. Examples of water-insoluble pesticides are fluxapyroxad (about 4 mg/l at 20 °C; mp about 157 °C) or pyraclostrobin (about 2 mg/l at 20 °C; mp about 60 °C). Using simple preliminary experiments, the skilled worker can select a pesticide with a suitable water-solubility from the above pesticide list.

The pesticide can have a **melting point** of more than 40°C, preferably more than 55°C and in particular more than 90°C.

The pesticide is preferably present in the concentrate **in dissolved form.** Using simple preliminary experiments, the skilled worker can select, from the above pesticide list, a pesticide with a suitable solubility.

In addition to the water-insoluble pesticide, the concentrate can comprise one or more **further pesticides.** The further pesticide is preferably water-insoluble. Usually, it is soluble in water to not more than 1 g/l, preferably not more than 200 mg/l and in particular not more than 50 mg/l at 20°C. Using simple preliminary experiments, the skilled worker can select a pesticide with a suitable water-solubility from the above pesticide list. In an especially preferred form, the concentrate does not comprise any further pesticide. In another especially preferred form, the further pesticide is pyraclostrobin.

In a preferred form the concentrate comprises the water insoluble pesticide fluxapyroxad and optionally a further pesticide, which is water insoluble (e.g. pyraclostrobin).

The concentrate may comprise from 0.1 to 60% by weight, preferably from 1 to 35% by weight, in particular from 5 to 30% by weight, of pesticide, the basis being the total of all the pesticides present in the concentrate.

The emulsifiable concentrate can furthermore comprise auxiliaries conventionally used for crop protection products. Suitable **auxiliaries** are solvents, liquid carriers, surfactants, dispersants, emulsifiers, wetters, adjuvants, solubilizers, penetrants, protective colloids, stickers, thickeners, bactericides, antifreeze agents, antifoam agents, colorants, adhesives and binders.

Suitable **surfactants** are surface-active compounds, such as anionic, cationic, nonionic and amphoteric surfactants, block polymers, polyelectrolytes, and mixtures thereof. Such surfactants can be used as emusifier, dispersant, solubilizer, wetter, penetrant, protective colloid, or auxiliary. Examples of surfactants are listed in McCutcheon's, Vol.1: Emulsifiers & Detergents, McCutcheon's Directories, Glen Rock, USA, 2008 (International Ed. or North American Ed.).

Suitable **anionic** surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates. Preferred anionic surfactants are sulfates and sulfonates.

Suitable **nonionic** surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are homo- or copolymers of vinylpyrrolidone, vinylalcohols, or vinylacetate. Nonionic surfactants such as alkoxylates may also be employed as adjuvants.

Preferred nonionic surfactants are alkoxylates, such as alkoxylated linear or branched C₈₋₂₀ alkanols. More preferred nonionic surfactants are ethoxylated, propoxylated or ethoxylated and propoxylated linear or branched C₁₂₋₁₈ alkanols. In a form the nonionic surfactants are ethoxylated and propoxylated branched C₁₀₋₁₄ alkanols. In a further form the nonionic surfactants are ethoxylated and propoxylated linear C₁₆₋₁₈ alkanols. The degree of alkoxylation of the alkoxylates is preferably from 3 to 30, more preferably from 6 to 20.

Suitable **cationic** surfactants are quaternary surfactants, for example quaternary ammonium compounds with one or two hydrophobic groups, or salts of long-chain primary amines. Suitable **amphoteric** surfactants are alkylbetains and imidazolines. Suitable **block polymers** are block polymers of the A-B or A-B-A type comprising blocks of polyethylene oxide and polypropylene oxide, or of the A-B-C type comprising alkanol, polyethylene oxide and polypropylene oxide. Suitable **polyelectrolytes** are polyacids or polybases. Examples of polyacids are alkali salts of polyacrylic acid or polyacid comb polymers. Examples of polybases are polyvinylamines or polyethyleneamines.

Suitable **adjuvants** are compounds which have negligible or even no pesticidal activity themselves, and which improve the biological performance of the compound I on the target. Examples are surfactants, mineral or vegetable oils, and other auxilaries. Further examples are listed by Knowles, Adjuvants and Additives, Agrow Reports DS256, T&F Informa UK, 2006, chapter 5.

Suitable **bactericides** are bronopol and isothiazolinone derivatives such as alkylisothiazolinones and benzisothiazolinones. Suitable **antifreeze agents** are ethylene glycol, propylene glycol, urea and glycerol. Suitable **antifoam agents** are silicones, long-chain alcohols, and salts of fatty acids. Suitable **colorants** (e.g. in red, blue, or green) are pigments which are sparingly soluble in water, and water-soluble dyes. Examples are inorganic colorants (e.g. iron oxide, titanium oxide, iron hexacyanoferrate) and organic colorants (e.g. alizarin, azo and phthalocyanine colorants).

The concentrate preferably comprises at least one **anionic surfactant.** The concentrate usually comprises not less than 0.5% by weight of anionic surfactants, preferably not less than 2% by weight and in particular not less than 3% by weight. The composition can comprise not more than 30% by weight of anionic surfactants, preferably not more than 15% by weight and in particular not more than 10% by weight.

The concentrate preferably comprises at least one **nonionic surfactant** (such as alkoxylates). The concentrate usually comprises not less than 1% by weight of nonionic surfactants, preferably not less than 5% by weight and in particular not less than 10% by weight. The composition can comprise not more than 45% by weight of nonionic surfactants, preferably not more than 35% by weight and in particular not more than 25% by weight.

Peferably, the concentrate comprises a nonionic surfactant (such as alkoxylates) and an anionic surfactant (such as sulfates or sulfonates).

The invention furthermore relates to a process for the **preparation** of the emulsifiable concentrate according to the invention by mixing the water-insoluble pesticide, the 2-ethylhexyl lactate, the amide of the formula (I), and the acetophenone.

The invention furthermore relates to an **emulsion** obtainable (preferably obtained) by mixing water, the water-insoluble pesticide, the components a), b) and c) according to the invention. The emulsion normally arises spontaneously upon mixing. In most cases, the emulsion is an oil-in-water emulsion. The mixing ratio of water to concentrate can be in the range of from 1000 to 1 up to 1 to 1, preferably 200 to 1 up to 3 to 1.

The invention furthermore relates to an **emulsion** comprising water and the concentrate according to the invention. The emulsion normally arises spontaneously upon mixing. In most cases, the emulsion is an oil-in-water emulsion. The mixing ratio of water to concentrate can be in the range of from 1000 to 1 up to 1 to 1, preferably 200 to 1 up to 3 to 1.

The invention furthermore relates to a method for **controlling** phytopathogenic fungi and/or undesired vegetation and/or undesired attack by insects or mites and/or for regulating the growth of plants, where the concentrate according to the invention or the emulsion according to the invention is allowed to act on the respective pests, their environment or on the crop plants to be protected from the respective pests, on the soil and/or on undesired plants and/or on the crop plants and/or their environment. In general, the therapeutic treatment of humans and animals is excluded from the method for controlling phytopathogenic fungi and/or undesired vegetation and/or undesired attack by insects or mites and/or for regulating the growth of plants.

When employed in crop protection, the **application rates of the pesticides** amount to from 0.001 to 2 kg per ha, preferably from 0.005 to 2 kg per ha, especially preferably from 0.05 to 0.9 kg per ha and in particular from 0.1 to 0.75 kg per ha, depending on the nature of the desired effect. In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kg of plant propagation material (preferably seed) are generally required. When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizers or micronutrients and further pesticides (for example herbicides, insecticides, fungicides, growth regulators, safeners) may be added to the emulsion in the form of a premix or optionally only shortly before use **(tank mix).** These agents can be admixed to the compositions according to the invention at a weight ratio of from 1:100 to 100:1, preferably from 1:10 to 10:1.

The user **applies** the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

**Advantages** of the present invention are, inter alia, that the concentrate is highly stable to low temperatures (e.g. even below 0°C); that the pesticide does not precipitate, cream or crystallize in the concentrate at low temperatures (e.g. even below 0°C); that the pesticide does not precipitate, cream or crystallize in the emulsion obtained from the concentrate, e.g. at low temperatures (e.g. even below 0°C); that high pesticide concentrations in the concentrate can be employed; that an emulsion forms spontaneously upon dilution of the concentrate with water; that the concentrate is capable of being stored over prolonged periods; that the concentrate does not require the presence of water (e.g. because it might freeze below 0 °C or would favor bacterial growth during storage); that the concentrate forms a stable emulsion upon dilution with water; that adjuvants (such as alkoxylates) can be included in the concentrate formulations; that the pesticide does in the emulsion obtained from the concentrate does not clogg any spraying filters or nozzles, e.g. at low temperatures, or when diluted with hard water. Most important advantage is the strongly reduced eye toxicity, which may allow for a much more save handling of the composition for the farmer. The reduced toxicity was even achieved while still keeping other advantages, such as long strorage stability.

### Examples

- Amid:: N,N-dimethyldodecanamide
- NS1:: nonionic surfactant, liquid ethoxylated polyalkylarylphenol, HLB 12-13.
- NS2:: nonionic surfactant, liquid ethoxylated and propoxylated isotridecanol, wetting about 10-20 s according to EN53901 at a concentration of 1 g/l at 23 °C
- AS1:: calcium alkylbenzenesulfonate, 40% by weight in aromatic solvent.

### Examples 1: Preparation of emulsifiable concentrates (EC)

The emulsifiable concentrates of fluxapyroxad (75 g/l) and pyraclostrobin (150 g/l) were prepared by mixing the components and making up to 1.0 I with (S)-2-ethylhexyl lactate. The compositions are summarized in Table 1.

**Table 1: Composition (all data in g/l)**

| | | | | | |
|---|---|---|---|---|---|
| Example | Amid | Acetophenone | AS1 | NS1 | NS2 |

### Example 2: Storage Stability with Freeze/Thaw Cycles

A sample of the EC of Example 1 was stored for 4 weeks with a temperature cycling between +10 °C and -10 °C (temperature change every 12 hours). No precipitation or crystallization was observed.

### Example 3: Accelerated Storage Stability Test

A sample of the EC of Example 1 was stored for 14 days at 54 °C. No precipitation or crystallization was observed and the EC stayed a clear liquid. The concentration of both actives was quantified before and after storage and did not decrease. The viscosity was determined before and after storage and stayed at 34 mPas.

### Example 4: Eye Toxicity

The eye toxicity of the EC of Example 1 was determined according to the OECD Guidelines 405 "Guideline for the Testing of Chemicals - Acute Eye Irritation / Corrosion". The EC of Example was classified as not irritant according to the Annex III of European Union Directive 67/548/EEC.

### Example 5: Comparative EC

A comparative EC was prepared as described in Example 1, wherein the amount of acetophenone was reduced from 150 to 30 g/l (since the remaining volume of the EC was filled up to 1.0 I with (S)-2-ethylhexyl lactate, the amount of the latter solvent was increased accordingly), the amount of fluxapyroxad was reduced from 75 to 60 g/l and the amount of pyraclostrobin was reduced from 150 to 120 g/l.

The eye toxicity of this comparative EC was tested as decribed in Example 4. The comparative EC was classified as R41 "Risk of serious damage to eyes" according to the Annex III of European Union Directive 67/548/EEC.

The clearly reduced eye toxicity of Example 1 compared to Example 5 was suprising, because a) Example 1 contained even higher amounts of pesticides, and b) the eye toxicity of the substituting solvents (S)-2-ethylhexyl lactate and acetophenone were both the same, namely R36 "Irritating to eyes" according to the Annex III of European Union Directive 67/548/EEC.

## Claims

1. An emulsifiable concentrate comprising a water-insoluble pesticide,
a) 2-ethylhexyl lactate,
b) 3% to 25% by weight of an amide of the formula (I)
R¹-C(O)N(R²)₂ (I)
where R¹ is C₇-C₁₁-alkyl and R² is methyl, and
c) at least 5% by weight acetophenone.

2. The concentrate according to claim 1, comprising at least 8%, preferably at least 11% by weight of the acetophenone.

3. The concentrate according to claim 1 or 2, comprising at least 5%, preferably at least 10% by weight of the alkyl lactate.

4. The concentrate according to claims 1 to 3, comprising not more than 20% by weight of the amide of the formula (I).

5. The concentrate according to claims 1 to 4, wherein the alkyl lactate is (S)-2-ethylhexyl lactate.

6. The concentrate according to claims 1 to 5, wherein R¹ is C₉-C₁₁-alkyl and R² is methyl.

7. The concentrate according to claims 1 to 6, wherein the concentrate is present as a homogeneous solution.

8. The concentrate according to claims 1 to 7, wherein the concentrate comprises not more than 3% by weight of water.

9. The concentrate according to claims 1 to 8 comprising up to 10% by weight of a further solvent.

10. The concentrate according to claims 1 to 9, comprising an alkoxylated alkanol.

11. The concentrate according to claim 10, comprising at least 4%, preferably at least 8% by weight of the alkoxylated alkanol.

12. A process for the preparation of the concentrate according to claims 1 to 11 by mixing the water-insoluble pesticide, the alkyl lactate, the amide of the formula (I), and the acetophenone.

13. An emulsion comprising water and the concentrate as defined in any one of claims 1 to 11.

14. A method for controlling phytopathogenic fungi and/or undesired vegetation and/or undesired attack by insects or mites and/or for regulating the growth of plants, where the concentrate according to any of claims 1 to 11 or the emulsion according to claim 13 is allowed to act on the respective pests, their environment or on the crop plants to be protected from the respective pests, on the soil and/or on undesired plants and/or on the crop plants and/or their environment.

## Patentansprüche

1. Emulgierbares Konzentrat, umfassend ein wasserunlösliches Pestizid,
a) 2-Ethylhexyllactat,
b) 3 Gew.-% bis 25 Gew.-% eines Amids der Formel (I),
R¹-C(O)N(R²)₂ (I),
wobei R¹ C₇-C₁₁-Alkyl bedeutet und R² Methyl bedeutet, und
c) mindestens 5 Gew.-% Acetophenon.

2. Konzentrat nach Anspruch 1, umfassend mindestens 8 Gew.-%, vorzugsweise mindestens 11 Gew.-% des Acetophenons.

3. Konzentrat nach Anspruch 1 oder 2, umfassend mindestens 5 Gew.-%, vorzugsweise mindestens 10 Gew.-%, des Alkyllactats.

4. Konzentrat nach Anspruch 1 bis 3, umfassend nicht mehr als 20 Gew.-% des Amids der Formel (I).

5. Konzentrat nach Anspruch 1 bis 4, wobei es sich bei dem Alkyllactat um (S)-2-Ethylhexyllactat handelt.

6. Konzentrat nach Anspruch 1 bis 5, wobei R¹ C₉-C₁₁-Alkyl bedeutet und R² Methyl bedeutet.

7. Konzentrat nach Anspruch 1 bis 6, wobei das Konzentrat als homogene Lösung vorliegt.

8. Konzentrat nach Anspruch 1 bis 7, wobei das Konzentrat nicht mehr als 3 Gew.-% Wasser umfasst.

9. Konzentrat nach Anspruch 1 bis 8, umfassend bis zu 10 Gew.-% eines weiteren Lösungsmittels.

10. Konzentrat nach Anspruch 1 bis 9, umfassend ein alkoxyliertes Alkanol.

11. Konzentrat nach Anspruch 10, umfassend mindestens 4 Gew.-%, vorzugsweise mindestens 8 Gew.-%, des alkoxylierten Alkanols.

12. Verfahren zur Herstellung des Konzentrats nach Anspruch 1 bis 11 durch Mischen des wasserunlöslichen Pestizids, des Alkyllactats, des Amids der Formel (I) und des Acetophenons.

13. Emulsion, umfassend Wasser und das Konzentrat wie in einem der Ansprüche 1 bis 11 definiert.

14. Verfahren zum Bekämpfen von phytopathogenen Pilzen und/oder unerwünschtem Pflanzenwuchs und/oder unerwünschtem Befall durch Insekten oder Milben und/oder zum Regulieren des Wachstums von Pflanzen, wobei man das Konzentrat nach einem der Ansprüche 1 bis 11 oder die Emulsion nach Anspruch 13 auf die jeweiligen Schädlinge, ihre Umwelt oder auf die gegen die entsprechenden Schädlinge zu schützenden Kulturpflanzen, auf den Boden und/oder auf unerwünschte Pflanzen und/oder auf die Kulturpflanzen und/oder ihre Umwelt ausbringt.

## Revendications

1. Concentré émulsionnable, comprenant un pesticide insoluble dans l'eau,
a) du lactate de 2-éthylhexyle,
b) de 3% à 25% en poids d'un amide de formule (I)
R¹-C(O)N(R²)₂ (I)
où R¹ est C₇-C₁₁-alkyle et R² est méthyle, et
c) au moins 5% en poids d'acétophénone.

2. Concentré selon la revendication 1, comprenant au moins 8%, préférablement au moins 11%, en poids de l'acétophénone.

3. Concentré selon la revendication 1 ou 2, comprenant au moins 5%, préférablement au moins 10%, en poids du lactate d'alkyle.

4. Concentré selon les revendications 1 à 3, comprenant au plus 20% en poids de l'amide de formule (I).

5. Concentré selon les revendications 1 à 4, dans lequel le lactate d'alkyle est le lactate de (S)-2-éthylhexyle.

6. Concentré selon les revendications 1 à 5, dans lequel R¹ est C₉-C₁₁-alkyle et R² est méthyle.

7. Concentré selon les revendications 1 à 6, où le concentré est présent sous forme d'une solution homogène.

8. Concentré selon les revendications 1 à 7, où le concentré comprend au plus 3% en poids d'eau.

9. Concentré selon les revendications 1 à 8, comprenant jusqu'à 10% en poids d'un autre solvant.

10. Concentré selon les revendications 1 à 9, comprenant un alcanol alcoxylé.

11. Concentré selon la revendication 10, comprenant Au moins 4%, préférablement au moins 8%, en poids de l'alcanol alcoxylé.

12. Procédé de préparation du concentré selon les revendications 1 à 11, par le mélange du pesticide insoluble dans l'eau, du lactate d'alkyle, de l'amide de formule (I), et de l'acétophénone.

13. Emulsion comprenant de l'eau et le concentré tel que défini selon l'une quelconque des revendications 1 à 11.

14. Méthode de contrôle de champignons phytopathogènes et/ou de végétation non désirée et/ou d'une attaque non désirée par des insectes ou des acariens et/ou de régulation de la croissance de plantes, où on laisse agir le concentré selon l'une quelconque des revendications 1 à 11 ou l'émulsion selon la revendication 13, sur les nuisibles respectifs, leur environnement ou sur les plantes de culture devant être protégées contre les nuisibles respectifs, sur le sol et/ou les plantes non désirées et/ou sur les plantes de culture et/ou leur environnement.
